# EUROPEAN PATENT APPLICATION

(11) **EP 4 830 821 A1**
(43) Date of publication of application: **28.10.2026**
(21) Application number: 24907333.9
(22) Date of filing: 13.12.2024
(51) Int. Cl.: B01D 63/02

(54) **HOLLOW FIBER MEMBRANE MODULE**

(30) Priority: 21.12.2023 JP 2023215459
(71) Applicant: Asahi Kasei Medical Co., Ltd., Tokyo 100-0006 (JP)
(72) Inventor: YOSHIMOTO, Yu, Tokyo 100-0006 (JP)
(74) Representative: dompatent
(86) International application number: PCT/JP2024/044278
(87) International publication number: WO 2025/134948

(57) **Abstract**

The structure is provided, which is designed to improve impact resistance performance upon dropping. To achieve this, a hollow fiber membrane module according to the present disclosure is a hollow fiber membrane module (1) including: a tubular container (10) that has one end portion and another end portion, which are open; a hollow fiber membrane bundle that is loaded in the tubular container (10); a potting portion (30) that embeds and fixes the hollow fiber membrane bundle at both end portions of the tubular container (10); and a header (40) that is provided at both end portions of the tubular container (10) in an axial direction thereof, the header (40) and the tubular container (10) being welded at a welded portion (50), wherein a clearance (C) in a radial direction of the tubular container (10) is formed between an outer circumference surface (16) of the tubular container (10) and an inner circumference surface (42i) of an annular side portion (42) of the header (40) located farther outside than the outer circumference surface (16) in the radial direction, and the clearance (C1) at a first position (P1) is formed to be wider than the clearance (C2) at a second position (P2) that is closer to the welded portion (50) in the axial direction than the first position (P1).

## Description

### Technical Field

The present invention relates to a hollow fiber membrane module.

### Background Art

Conventionally, various hollow fiber membrane type blood purifiers (referred to as "hollow fiber membrane modules" in this specification) that purify blood by using hollow fiber membranes loaded in a main container have been developed for extracorporeal circulation blood purification therapies, such as hemodialysis, hemofiltration, plasma separation, and plasma component fractionation, and are used in many blood purification therapies and the like that use membrane separation technology.

A hollow fiber membrane module is generally configured by: loading a bundle of hollow fiber membranes into a tubular main container (tubular container) having a port provided at a side portion thereof; embedding and fixing the end portions of the hollow fiber membrane bundle in the main container by using a potting material such as urethane; and attaching headers to both ends of the main container.

From the viewpoint of further improving the pressure-resistant welding strength between the header and the tubular container, a technique of increasing the welding length of the welded portion has been proposed (Patent Literature 1).

### Citation List

### Patent Literature

Patent Literature 1: WO 2017/171015

### Summary of Invention

### Technical Problem

However, to date, there have been no improvements made that are primarily aimed at improving strength so as to withstand impact when a hollow fiber module is dropped.

As such, it is an object of the present invention to provide a hollow fiber membrane module having a structure capable of improving impact resistance performance upon dropping.

### Solution to Problem

To solve such problems, one aspect of the present invention is a hollow fiber membrane module including:
a tubular container that has one end portion and another end portion, which are open;
a hollow fiber membrane that is bundle loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction thereof,
the header and the tubular container being welded at a welded portion, wherein a clearance in a radial direction of the tubular container is formed between an outer circumference surface of the tubular container and an inner circumference surface of an annular side portion of the header located farther outside than the outer circumference surface in the radial direction, and
the clearance at a first position is formed to be wider than the clearance at a second position that is closer to the welded portion than the first position in the axial direction.

In the hollow fiber membrane module as described above, the welded portion may be a single welded portion formed at a contact site between the end portion of the tubular container and the header.

In the hollow fiber membrane module as described above, the clearance may increase from the second position toward the first position.

In the hollow fiber membrane module as described above, the clearance may gradually increase from the second position toward the first position.

In the hollow fiber membrane module as described above, the clearance may increase stepwise from the second position toward the first position.

In the hollow fiber membrane module as described above, the inner circumference surface may include a small diameter portion and a large diameter portion having a larger inner diameter than the small diameter portion.

In the hollow fiber membrane module as described above, an intermediate portion that connects the small diameter portion and the large diameter portion may be provided between the small diameter portion and the large diameter portion.

In the hollow fiber membrane module as described above, the intermediate portion may have a tapered shape.

In the hollow fiber membrane module described above, the small diameter portion may be formed to be slightly larger than an outer diameter of the end portion of the tubular container to an extent that the small diameter portion functions as a surface for positioning a relative position of the tubular container and the header in a radial direction perpendicular to the central axis when the tubular container and the header are welded.

In the hollow fiber membrane module as described above, a value obtained by dividing the clearance at the first position that is a position on the end portion outer circumference surface opposite an edge portion of the annular side portion by a length from a lowermost portion of the welded portion at the outer circumference surface to a position on the outer circumference surface opposite the edge portion may be greater than or equal to 0.29.

In the hollow fiber membrane module as described above, the welded portion may be arranged at a position other than a position vertically above a collision site upon dropping that is located at a lowermost vertical position of a section of the header excluding a nozzle portion in a state in which the hollow fiber membrane module is tilted at an angle that is less than a predetermined angle and exceeds 0° at which the central axis is horizontal relative to a horizontal plane.

In the hollow fiber membrane module as described above, the predetermined angle may be an angle at which, in a state in which the hollow fiber membrane module is tilted relative to the horizontal plane, a vertical height of a lowermost position of the nozzle portion or an elastic member to be attached to the nozzle portion relative to the horizontal plane is equal to a vertical height of the collision site upon dropping relative to the horizontal plane.

In the hollow fiber membrane module as described above, the elastic member may be a rubber plug to be attached to the nozzle portion.

In the hollow fiber membrane module as described above, when an angle of a central axis of the hollow fiber membrane module relative to the horizontal plane is an angle within a range greater than 0° and less than or equal to 38°, the welded portion may be located at a position other than a position vertically above the collision site upon dropping.

In the hollow fiber membrane module as described above, a diameter size of an outermost diameter portion of the header may be equal to a diameter size of an outermost diameter portion of the tubular container.

In the hollow fiber membrane module as described above, an axial length of the outermost diameter portion of the header along the central axis may be equal to an axial length of the outermost diameter portion of the tubular container along the central axis.

In the hollow fiber membrane module as described above, the axial length of the outermost diameter portion of the header along the central axis may be longer than the axial length of the outermost diameter portion of the tubular container along the central axis.

In the hollow fiber membrane module as described above, the axial length of the outermost diameter portion of the tubular container along the central axis may be longer than the axial length of the outermost diameter portion of the header along the central axis.

Another aspect of the present invention is a hollow fiber membrane module including:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction thereof, in which
a clearance sufficient to avoid contact between an outer circumference surface of the tubular container and a predetermined location of the header, when a relative position of the tubular container and the header changes in response to an external impact acting on the header, is formed between the outer circumference surface of the tubular container and an inner circumference surface of an annular side portion of the header located farther outside than the outer circumference surface in a radial direction of the tubular container.

In the hollow fiber membrane module as described above, the welded portion may be a single welded portion formed at a contact site between the end portion of the tubular container and the header.

In the hollow fiber membrane module as described above, a predetermined location of the header may be an edge portion, which is most distant from the welded portion, of the inner circumference surface of the annular side portion of the header.

Yet another aspect of the present invention is a hollow fiber membrane module including:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in a direction of a central axis extending in a longitudinal direction thereof, in which
the header and the tubular container are welded at a welded portion formed at a contact site between the end portion of the tubular container and the header,
a clearance in a radial direction of the tubular container is formed between an outer circumference surface of the tubular container and an inner circumference surface of an annular side portion of the header located farther outside than the outer circumference surface in the radial direction,
the clearance at a first position is formed to be wider than the clearance at a second position that is closer to the welded portion than the first position in the axial direction,
the welded portion is located at a position other than a position vertically above a collision site upon dropping that is located at a lowermost vertical position of the header in a state in which the hollow fiber membrane module is tilted up to a predetermined angle exceeding 0° at which the central axis is horizontal, and
a diameter size of an outermost diameter portion of the header is equal to a diameter size of an outermost diameter portion of the tubular container.

### Advantageous Effect of Invention

According to the present invention, it is possible to improve the impact resistance performance upon dropping.

### Brief Description of Drawings

[Figure 1] Figure 1 is a longitudinal cross-sectional view illustrating an example of the configuration of a hollow fiber membrane module in an orientation in which the hollow fiber membrane module is dropped with an outer circumference edge of a top plate portion of a header leading.
[Figure 2A] Figure 2A is an enlarged cross-sectional view illustrating an example of the configuration of a welded portion between a main container and a header, and its surrounding area.
[Figure 2B] Figure 2B is an enlarged cross-sectional view illustrating a clearance C1 and a length D at the welded portion between the main container and the header, and its surrounding area.
[Figure 3] Figure 3 is a longitudinal cross-sectional view illustrating an example of the configuration of a hollow fiber membrane module in an orientation in which the hollow fiber membrane module is dropped with its central axis A at 0°, which is horizontal.

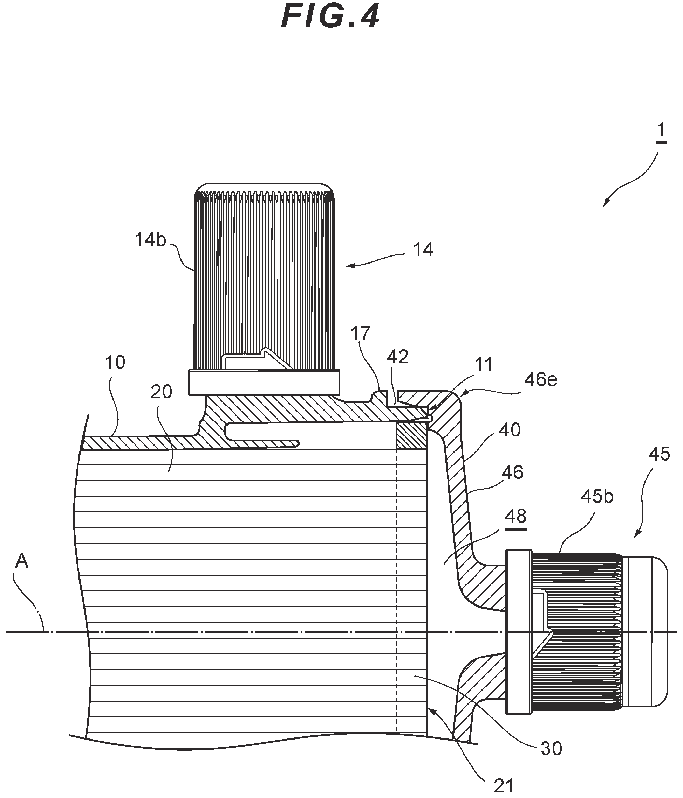

[Figure 4] Figure 4 is a longitudinal cross-sectional view illustrating an example of the configuration of a hollow fiber membrane module in which an intermediate portion has a more gently tapered shape.
[Figure 5] Figure 5 is a diagram schematically illustrating a manner in which a header opens due to an effect of an impact acting on the welded portion when a hollow fiber membrane module is dropped.
[Figure 6] Figure 6 is a diagram schematically illustrating a manner in which a hollow fiber membrane module having a predetermined clearance formed between a container and a header is dropped.
[Figure 7] Figure 7 is a diagram schematically illustrating a manner in which a hollow fiber membrane module having a relatively short leg portion (annular side portion) of a header is dropped.
[Figure 8] Figure 8 is a diagram schematically illustrating a manner in which an impact acts on a welded portion when a hollow fiber membrane module is dropped.
[Figure 9] Figure 9 is a diagram schematically illustrating a manner in which a leg portion of a header opens due to inertial forces when a hollow fiber membrane module is dropped and an impact acts on a welded portion.
[Figure 10] Figure 10 is a diagram schematically illustrating a manner in which an impact acts on a welded portion when a hollow fiber membrane module is dropped.
[Figure 11] Figure 11 is a diagram schematically illustrating a manner in which an impact acts when a hollow fiber membrane module is dropped in a sideways orientation.
[Figure 12] Figure 12 is a diagram schematically illustrating a manner in which a tubular container is deformed with a welded portion as a fulcrum when a hollow fiber membrane module is dropped in a sideways orientation.
[Figure 13] Figure 13 is a diagram schematically illustrating a manner in which a hollow fiber membrane module in which the diameter size of an outermost diameter portion of a header is equal to the diameter size of an outermost diameter portion of a tubular container is dropped in a sideways orientation.

### Description of Embodiments

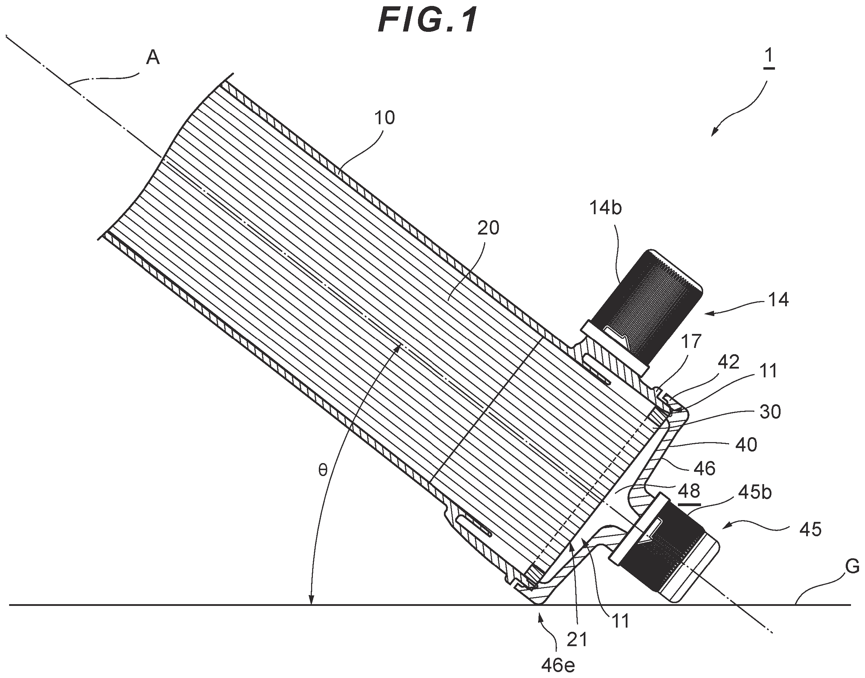

A configuration of the present invention is described in detail below based on an example of an embodiment illustrated in the drawings (see Figure 1, for example).

### <Configuration of Hollow Fiber Membrane Module>

The configuration of a hollow fiber membrane module according to the present embodiment is first described (see Figure 1, for example). A hollow fiber membrane module 1 includes a tubular container 10, a hollow fiber membrane bundle 20, potting portions 30, headers 40, welded portions 50, and the like.

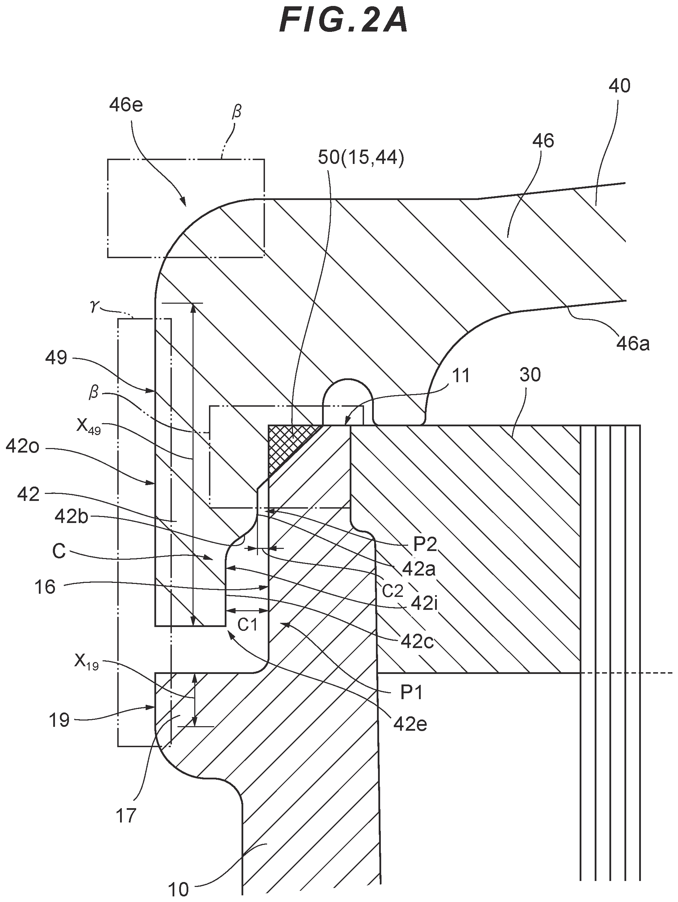

The tubular container 10 is formed in a tubular shape, and both end portions 11 in the longitudinal direction (direction of a central axis A of the tube) are open. The hollow fiber membrane bundle 20 is housed inside the tubular container 10. Two ports 14, for example, each serving as a fluid inlet and outlet are formed at the side surface of the tubular container 10 (only one of the ports is illustrated in Figure 1). Also, an annular outer protruding portion 17 is formed near the end portion 11 and has its axis center on the central axis A (see Figures 1 and 2A). Of the outer circumference surface of the tubular container 10, the outer circumference surface corresponding to the section from the end portion 11 to the outer protruding portion 17 is particularly referred to in this specification as an "end portion outer circumference surface" and is indicated by reference numeral 16 (see Figure 2A).

The hollow fiber membrane bundle 20 is a bundle of a large number of hollow fiber membranes, and is housed and loaded in the tubular container 10 in the longitudinal direction. The hollow fiber membrane bundle 20 functions as a separation membrane and separates the components of the fluid to be separated between the inner and outer regions of each hollow fiber membrane.

The potting portions 30 are made of potting resin and embed both end portions 21 of the hollow fiber membrane bundle 20 inside both end portions 11 of the tubular container 10, and fix the hollow fiber membrane bundle 20 to both end portions 11 of the tubular container 10. Examples of potting resin include polyurethane resin, epoxy resin, and silicone resin, but are not limited to these.

The headers 40 are provided at the openings of both end portions 11 of the tubular container 10 as lids for these end portions 11. Each header 40 includes a tubular nozzle portion 45, which is arranged along the central axis A and serves as a fluid inlet and outlet, a plate-shaped top plate portion 46, which extends radially from the nozzle portion 45, a leg portion 42, which protrudes from the top plate portion 46 toward the tubular container 10, and a shoulder section between the top plate portion 46 and the leg portion 42 (this refers to a section including a curved surface that smoothly connects the surface of the top plate portion 46 and the circumference surface of the leg portion 42; hereinafter, this is referred to as an "outer circumference edge" in this specification and is indicated by reference numeral 46e in the drawing). The surface connecting the surface of the top plate portion 46 and the circumference surface of the leg portion 42 at the shoulder section may have a corner.

The nozzle portion 45 has a thread structure for connecting an external tube (not illustrated). The top plate portion 46 faces the end portion 21 of the hollow fiber membrane bundle 20 and has an inner surface 46a whose diameter gradually increases from the nozzle portion 45 toward the end portion 11 of the tubular container 10. Between this inner surface 46a and the end portion 21 of the hollow fiber membrane bundle 20, a space 48 is formed through which a fluid flowing in from the nozzle portion 45 or a fluid flowing out from the nozzle portion 45 passes.

The leg portion 42 is tubular, has its axis center on the central axis A, and is formed so as to extend along the central axis A toward the outer protruding portion 17 of the tubular container 10 as viewed in a longitudinal cross-sectional view (see Figure 2A, for example).

The welded portion 50 is a section in which the header 40 and the tubular container 10 are welded to each other. The header 40 and the tubular container 10 may be considered as sections in which interference sections that interfere with each other (for example, an interference section 44 at or near the inner circumference surface 42i of the leg portion 42 of the header 40 and an interference section 15 at or near the annular outer circumference edge portion of the end portion 11 of the tubular container 10) are welded through ultrasonic welding, for example (see Figure 2A). In this embodiment, an example is illustrated in which the welded portion 50 formed at the contact site between the end portion 11 of the tubular container 10 and the header 40 is single (at one location in a cross-sectional view) (see Figure 2A, for example). Alternatively, although not particularly illustrated in the present application, an aspect may be adopted in which the tubular container 10 and the header 40 are welded at multiple locations. Reference numeral 42o in Figure 2A indicates the outer circumference surface of the leg portion 42.

### <Clearance Formed Between Tubular Container and Header>

In the hollow fiber membrane module 1 of this embodiment, a predetermined radial clearance C is formed between the end portion outer circumference surface 16 of the tubular container 10 and the inner circumference surface 42i of the section of the annular side portion of the leg portion 42 of the header 40 that is located outside the end portion outer circumference surface 16 in the radial direction of the tubular container 10 (see Figure 2A). In the hollow fiber membrane module 1 of this embodiment, the clearance C is formed such that a clearance C1 at a first position P1 is wider than a clearance C2 at a second position P2, which is closer to the welded portion 50 than the first position P1 in the direction along the central axis A (see Figure 2A). That is, the clearance C1 and the clearance C2 have different widths. For example, the first position P1 and the second position P2 are different positions on the end portion outer circumference surface 16 in the direction along the central axis A. The first position P1 may be a position opposite the edge portion 42e (on the side corresponding to the outermost diameter portion 19) of the leg portion 42 in the direction along the central axis A. The size of the clearance C in this case (described herein as including both the first clearance C1 and the second clearance C2) is large enough to avoid contact between the end portion outer circumference surface 16 of the tubular container 10 and a predetermined location of the header 40 even if deformation occurs in response to an external impact acting on the header 40 when the hollow fiber membrane module 1 is dropped and the relative position of the tubular container 10 and the header 40 changes. The predetermined location of the header 40 as described herein is not particularly limited, and is a location that should not be brought into contact with the tubular container 10, for example, the edge portion 42e of the inner circumference surface 42i of the leg portion (annular side portion) 42 of the header 40 that is most distant from the welded portion 50 (see Figure 2A).

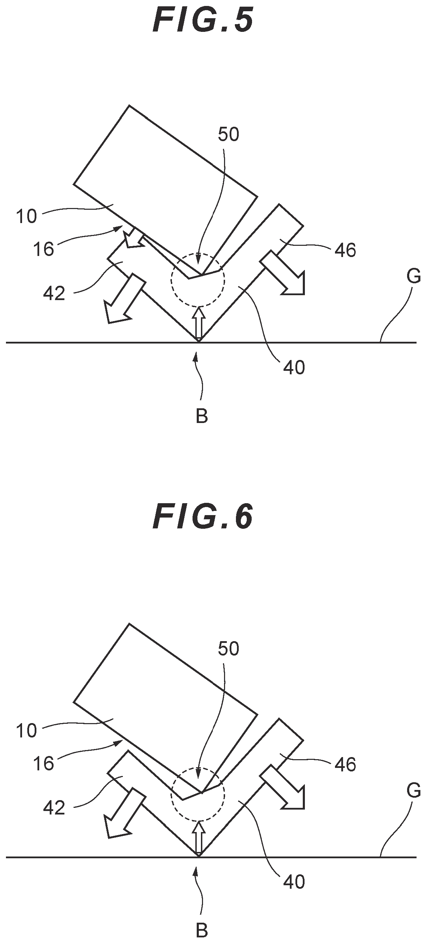

Generally, assuming that the hollow fiber membrane module 1 is accidentally dropped to the ground or the like (indicated by symbol G in figures), when an external impact acts on a part of the header 40, such as the outer circumference edge 46e of the top plate portion 46, an external force may be applied that changes the relative position of the tubular container 10 and the header 40, with the welded portion 50 near the section receiving the impact as a fulcrum (see Figure 5). When the relative position of the tubular container 10 and the header 40 changes, the end portion outer circumference surface 16 of the tubular container 10 may come into contact with a part of the header 40 (the part that is particularly problematic here is the inner circumference surface 42i of the annular side portion, referred to as the leg portion 42), and at this time, a large repulsion force may act instantaneously on a narrow section. This may cause deformation or partial damage around the welded portion 50. In this regard, according to the hollow fiber membrane module 1 of this embodiment as described above, the clearance C sufficient to avoid contact between the end portion outer circumference surface 16 of the tubular container 10 and a part of the header 40 (particularly the inner circumference surface 42i of the leg portion 42) is formed. Accordingly, even if an impact is applied, it is possible to limit deformation or partial damage, which would otherwise be caused by contact between the end portion outer circumference surface 16 of the tubular container 10 and a part of the header 40 (see Figure 6).

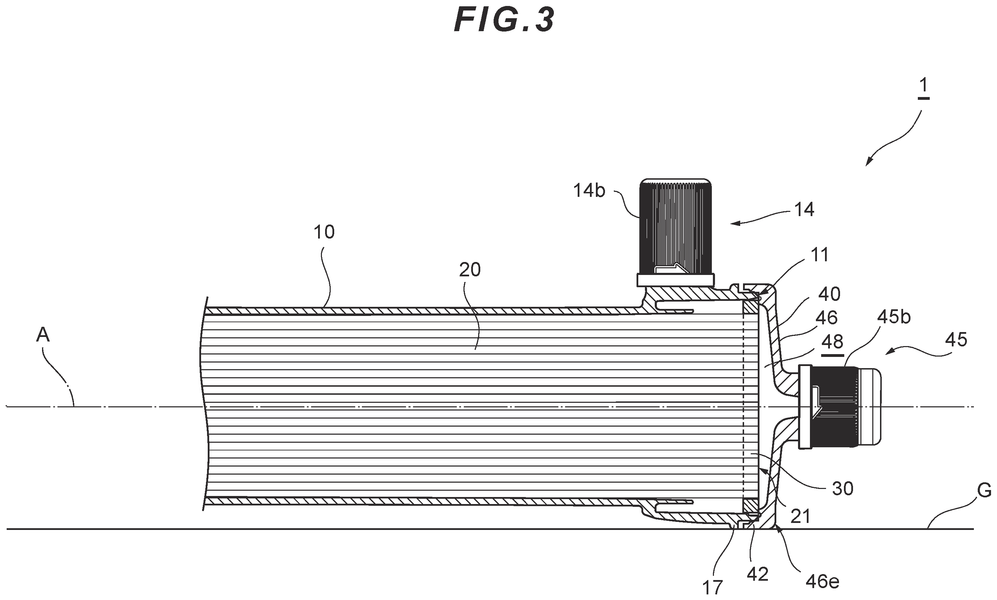

As described above, from the viewpoint of avoiding contact between the end portion outer circumference surface 16 of the tubular container 10 and a part of the header 40, the clearance C preferably increases from the second position P2 toward the first position P1 (see Figure 2A). In this case, the shape or manner of the increase is not particularly limited, and it may gradually increase from the second position P2 toward the first position P1, or it may increase stepwise from the second position P2 toward the first position P1 (see Figure 2A). As an example of the latter, the present embodiment employs a header 40 that includes, at the inner circumference surface 42i, a small diameter portion 42a, a large diameter portion 42c having a greater inner diameter than the small diameter portion 42a, and an intermediate portion 42b connecting the small diameter portion 42a and the large diameter portion 42c (see Figure 2A). For example, the clearance C1 at the first position P1 corresponds to the large diameter portion 42c, and the clearance C2 at the second position P2 corresponds to the small diameter portion 42a. The intermediate portion 42b preferably has a tapered shape so as to function as a guide for concentrically positioning the relative position of the tubular container 10 and the header 40 when they are welded (see Figure 3, for example). The intermediate portion 42b may have a more gently tapered shape (see Figure 2A). The small diameter portion 42a is formed to be slightly larger than the outer diameter of the end portion 11 of the tubular container 10 (see Figure 2A). When the tubular container 10 and the header 40 are welded, the small diameter portion 42a thus formed can function as a surface for positioning the relative position of the tubular container 10 and the header 40 in the radial direction, which is perpendicular to the central axis A.

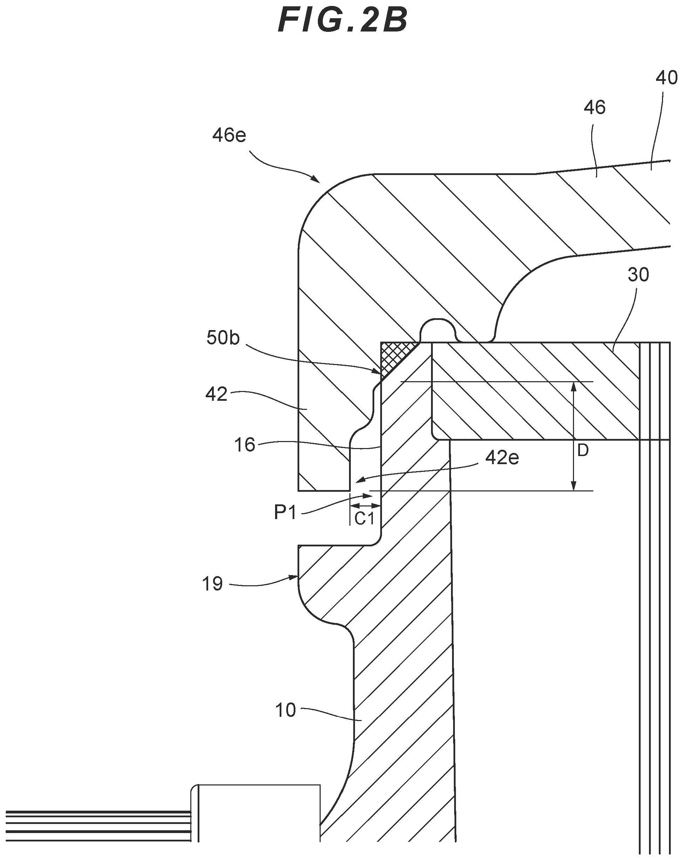

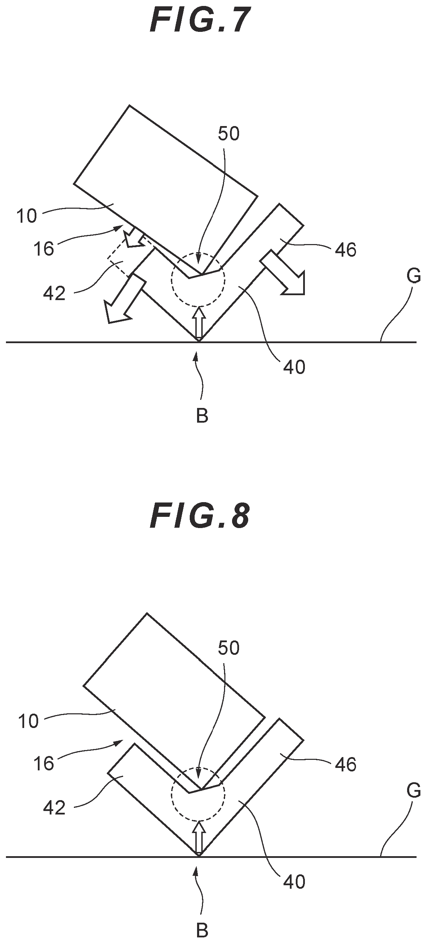

The clearance C or its surrounding area may have various shapes and structures as long as they can limit deformation or partial damage caused by contact between the end portion outer circumference surface 16 of the tubular container 10 and a part of the header 40. For example, it is preferable that the size of the clearance C1 is greater than or equal to 0.8 mm, and the size of the clearance C2 is greater than or equal to 0.2 mm, but these are merely preferred examples. Alternatively, the length (protruding length in the axial direction) of the leg portion 42 of the header 40 may be shortened to limit contact between the end portion outer circumference surface 16 of the tubular container 10 and a part of the header 40 (see Figure 7). Furthermore, in another example, a value obtained by dividing the size of the clearance C1 from the edge portion 42e of the leg portion 42 to the first position P1 opposite the edge portion 42e on the end portion outer circumference surface 16 by the length D in the axial direction from a welding lowermost portion 50b, which is located at the lowermost vertical position of the welded portion 50, to the first position P1 opposite the edge portion 42e on the end portion outer circumference surface 16 (ratio, i.e., C1/D) is preferably greater than or equal to 0.29 (with the third decimal rounded) (see Figure 2B). That is, the value obtained by dividing the clearance C1 at the first position P1, which is at a position on the end portion outer circumference surface 16 opposite the edge portion 42e of the annular side portion 42, by the length D in the axial direction from the lowermost portion 50b of the welded portion 50 at the outer circumference surface 16 to the first position P1 opposite the edge portion 42e on the outer circumference surface 16 is preferably greater than or equal to 0.29. Such a ratio can limit deformation or partial damage caused by contact between the end portion outer circumference surface 16 of the tubular container 10 and a part of the header 40.

### <Positional Relationship of Welded Portion Relative to Header Outer Shape (See Part Indicated by Symbol β in Figure 2A)>

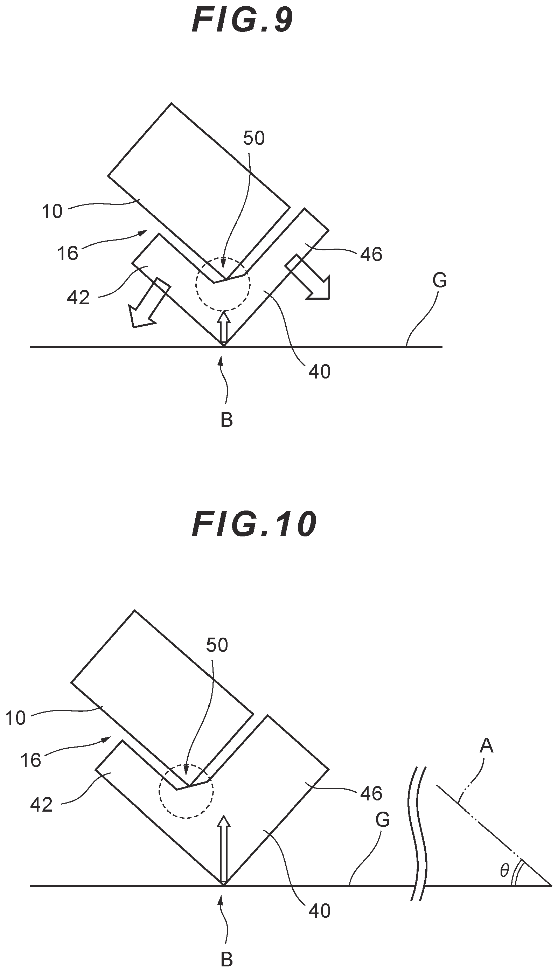

The impact and its effects caused when the hollow fiber membrane module 1 is dropped may vary significantly depending on the orientation and tilt of the hollow fiber membrane module 1 at the time of the drop. For example, when an external impact acts on the welded portion 50 due to the hollow fiber membrane module 1 being dropped with the outer circumference edge 46e of the top plate portion 46 of the header 40 leading (see Figure 8), if inertial forces act to open the leg portion 42 and the top plate portion 46 of the header 40 (see Figure 9), a great stress is generated, though momentarily, in the welded portion 50, which is a fragile portion, and this may result in damage. When examining the orientation in which the hollow fiber membrane module 1 is dropped with the outer circumference edge 46e leading in this manner, it is found that a condition for such an orientation is an orientation in which the angle of the central axis A relative to a horizontal line of the ground or the like G is within a predetermined range, in other words, a predetermined orientation in which the outer circumference edge 46e hits the ground before the nozzle portion 45 or an elastic member 45b, such as a rubber plug attached to the nozzle portion 45 (however, orientations in which the port 14 or the elastic member 14, such as a rubber plug attached to the port 14, hits the ground first are not taken into consideration here). Further examination reveals that, particularly within that range, when a section that receives an impact upon dropping (in this example, the outer circumference edge 46e) and the welded portion 50 are on the same straight line (in other words, when the hollow fiber membrane module 1 is dropped in an orientation in which the welded portion 50 is vertically directly above the outer circumference edge 46e), a larger impact acts on the welded portion 50 because bending deformation occurs with the collision portion as a fulcrum. As such, it is considered possible to reduce stress on the welded portion 50 and limit damage by adjusting the positional relationship between the outer circumference portion (particularly the outer circumference edge 46e) of the header 40 and the welded portion 50 so that such a large impact does not act.

In view of the results of the examination and the content of the events as described above, in the hollow fiber membrane module 1 of the present embodiment, the welded portion 50 is arranged at a position other than a position vertically above a collision site upon dropping (indicated by reference sign B in Figure 8 and the like; in the present example, it corresponds to a section of the outer circumference edge 46e of the header 40), which is located at the lowermost vertical position of the header 40 in a state in which the hollow fiber membrane module 1 is tilted at an angle that is less than a predetermined angle θ and exceeds 0° at which the central axis is horizontal relative to a horizontal plane (the surface of the ground or the like G) (see Figure 10). In this case, the predetermined angle θ can be considered as an angle at which, when the hollow fiber membrane module 1 is tilted, the vertical height of the lowermost position of the nozzle portion 45 or the elastic member 45b, such as a rubber plug, attached to the nozzle portion 45 is equal to the vertical height of the collision site upon dropping B. Such an angle can be uniquely determined by the design of the hollow fiber membrane module. For example, when the predetermined angle θ is a value greater than 38°, such as 39°, the angle in a predetermined range of the central axis A relative to a horizontal line of the ground or the like G in this example may be an angle within a range of 0 to 38°, more specifically, an angle within a range greater than 0° and less than or equal to 38° (see Figure 1). The angle θ in Figure 1 is 38°, and the nozzle portion 45 is not in contact with the ground or the like G. In this state, the welded portion 50 is arranged at a position other than a position that is vertically above a collision site upon dropping that is located at a lowermost vertical position of the header 40.

### <Outer Diameter of Header and Outer Diameter of Tubular Member (See Section Indicated by Symbol Γ in Figure 2A)>

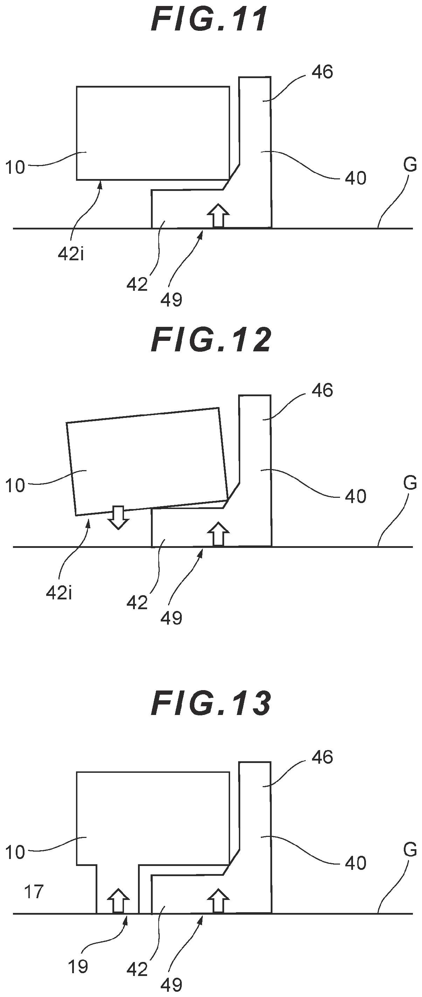

A hollow fiber membrane module 1 is described below in which the diameter size of an outermost diameter portion 49 of a header 40 and the diameter size of an outermost diameter portion 19 of a tubular container 10 are made equal to improve drop strength (see Figures 11 to 13).

In general, assuming a case in which the hollow fiber membrane module 1 is accidentally dropped onto the ground or the like G, when a collision occurs with the surface that collides with the ground or the like G and the module longitudinal direction (that is, the direction along the central axis A) being horizontal or at a nearly horizontal angle, if the header 40 or the tubular container 10 protrudes, the impact force may be concentrated on either of them, and damage may easily occur. Furthermore, for example, if the header 40 protrudes to the side, when a collision occurs with the surface that collides with the ground or the like G and the module longitudinal direction (that is, the direction along the central axis A) being horizontal or at a nearly horizontal angle (see Figure 11), the tubular container 10 may deform with the welded portion 50 as a fulcrum due to inertial forces, and a large stress may be generated in the welded portion 50 (see Figure 12). In this regard, as described above, according to the hollow fiber membrane module 1 in which the diameter size of the outermost diameter portion 49 of the header 40 and the diameter size of the outermost diameter portion 19 of the tubular container 10 are equal, the header 40 and the tubular container 10 collide substantially simultaneously, dispersing the impact force and thus limiting concentration of the impact force on either the header 40 or the tubular container 10 (see Figure 13). In other words, by increasing the diameter of the outer protruding portion 17 of the tubular container 10 so that the outer diameter of the outer protruding portion 17 is equal to the outer diameter of the header 40, a collision portion (convex portion) similar to the header 40 can be provided on the tubular container 10.

In the hollow fiber membrane module 1 of the present embodiment, in which the diameter size of the outermost diameter portion 49 of the header 40 and the diameter size of the outermost diameter portion 19 of the tubular container 10 are made equal as described above, the axial length X₄₉ along the central axis A of the outermost diameter portion 49 of the header 40 (more specifically, in a longitudinal cross-section, the length of a section of the outer edge of the header 40 that is straight in the vertical direction, and, in other words, the length of a section that may come into contact with the ground when the hollow fiber membrane module 1 is dropped or falls sideways in a state in which the central axis A is horizontal, i.e., at 0°) is longer than the axial length X₁₉along the central axis A of the outermost diameter portion 19 of the tubular container 10 (more specifically, in a longitudinal cross-section, the length of a section of the outer edge of the outer protruding portion 17 of the tubular container 10 that is straight in the vertical direction, and, in other words, the length of a section that may come into contact with the ground when the hollow fiber membrane module 1 is dropped or falls sideways in a state in which the central axis A is horizontal, i.e., at 0°) (see Figure 2A). However, this is merely a preferred example, and other embodiments are possible. That is, although not specifically illustrated, the axial length X₄₉ along the central axis A of the outermost diameter portion 49 of the header 40 and the axial length X₁₉ along the central axis A of the outermost diameter portion 19 of the tubular container 10 may be equal, or the axial length X₁₉ along the central axis A of the outermost diameter portion 19 of the tubular container 10 may be longer than the axial length X₄₉ along the central axis A of the outermost diameter portion 49 of the header 40.

It should be noted that making the diameter size of the outermost diameter portion 49 of the header 40 and the diameter size of the outermost diameter portion 19 of the tubular container 10 equal as described above does not mean only making the dimensions of both strictly equal. As long as it is possible to distribute and mitigate the impact when the hollow fiber membrane module 1 collides with the ground or the like G with the surface that collides with the ground or the like G and the module longitudinal direction being horizontal or at a nearly horizontal angle, the dimensions of both do not have to be strictly equal, and a slight difference in the dimensions of both (for example, a difference of about ±1 mm) may also be acceptable.

Conventionally, improvements to the strength of hollow fiber membrane modules have been made from the viewpoint of achieving liquid-tight sealing or enhancing pressure-resistant welding strength, but, to date, there have been no improvements made that are primarily aimed at improving strength so as to withstand impact when a hollow fiber membrane module is dropped. However, when a hollow fiber membrane module 1 in which a header 40 and a tubular container 10 are joined is accidentally dropped by slipping out of a hand during manufacturing, transportation, or use, an impact may act on a part, causing deformation around the joint portion, or the header 40 and the tubular container 10 may collide with each other, causing partial damage. In this regard, the hollow fiber membrane module 1 of the present embodiment described above can improve the impact resistance performance upon dropping, and can limit deformation and partial damage caused by, for example, contact between the outer circumference surface of the tubular container 10 and a part of the header 40.

The above-described embodiments are preferred examples of the present invention. However, the present invention is not limited to these, and various modifications can be made without departing from the gist of the present invention.

Some or all of the above-described embodiments can also be described as the clauses below. However, the present invention is not limited to the following clauses.

### [Clause 1]

A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction thereof,
the header and the tubular container being welded at a welded portion, wherein
   a clearance in a radial direction of the tubular container is formed between an outer circumference surface of the tubular container and an inner circumference surface of an annular side portion of the header located farther outside than the outer circumference surface in the radial direction, and
the clearance at a first position is formed to be wider than the clearance at a second position that is closer to the welded portion than the first position in the axial direction.

### [Clause 2]

The hollow fiber membrane module according to clause 1, wherein the welded portion is a single welded portion formed at a contact site between the end portion of the tubular container and the header.

### [Clause 3]

The hollow fiber membrane module according to clause 1 or 2, wherein the clearance increases from the second position toward the first position.

### [Clause 4]

The hollow fiber membrane module according to any one of clauses 1 to 3, wherein the clearance gradually increases from the second position toward the first position.

### [Clause 5]

The hollow fiber membrane module according to any one of clauses 1 to 3, wherein the clearance increases stepwise from the second position toward the first position.

### [Clause 6]

The hollow fiber membrane module according to any one of clauses 1 to 5, wherein the inner circumference surface includes a small diameter portion and a large diameter portion having a larger inner diameter than the small diameter portion.

### [Clause 7]

The hollow fiber membrane module according to clause 6, wherein an intermediate portion that connects the small diameter portion and the large diameter portion is provided between the small diameter portion and the large diameter portion.

### [Clause 8]

The hollow fiber membrane module according to clause 7, wherein the intermediate portion has a tapered shape.

### [Clause 9]

The hollow fiber membrane module according to clause 8, wherein the small diameter portion is formed to be slightly larger than an outer diameter of the end portion of the tubular container to an extent that the small diameter portion functions as a surface for positioning a relative position of the tubular container and the header in a radial direction perpendicular to the central axis when the tubular container and the header are welded.

### [Clause 10]

The hollow fiber membrane module according to clause 9, wherein a value obtained by dividing the clearance at the first position that is a position on the end portion outer circumference surface opposite an edge portion of the annular side portion by a length from a lowermost portion of the welded portion at the outer circumference surface to a position on the outer circumference surface opposite the edge portion is greater than or equal to 0.29.

### [Clause 11]

The hollow fiber membrane module according to clause 2, wherein the welded portion is arranged at a position other than a position vertically above a collision site upon dropping that is located at a lowermost vertical position of a section of the header excluding a nozzle portion in a state in which the hollow fiber membrane module is tilted at an angle that is less than a predetermined angle and exceeds 0° at which the central axis is horizontal relative to a horizontal plane.

### [Clause 12]

The hollow fiber membrane module according to clause 11, wherein the predetermined angle is an angle at which, in a state in which the hollow fiber membrane module is tilted relative to the horizontal plane, a vertical height of a lowermost position of the nozzle portion or an elastic member to be attached to the nozzle portion relative to the horizontal plane is equal to a vertical height of the collision site upon dropping relative to the horizontal plane.

### [Clause 13]

The hollow fiber membrane module according to clause 12, wherein the elastic member is a rubber plug to be attached to the nozzle portion.

### [Clause 14]

A hollow fiber membrane module according to clause 13, wherein when an angle of a central axis of the hollow fiber membrane module relative to the horizontal plane is an angle within a range greater than 0° and less than or equal to 38°, the welded portion is located at a position other than a position vertically above the collision site upon dropping.

### [Clause 15]

The hollow fiber membrane module according to any one of clauses 1 to 14, wherein a diameter size of an outermost diameter portion of the header is equal to a diameter size of an outermost diameter portion of the tubular container.

### [Clause 16]

The hollow fiber membrane module according to clause 15, wherein an axial length of the outermost diameter portion of the header along the central axis is equal to an axial length of the outermost diameter portion of the tubular container along the central axis.

### [Clause 17]

The hollow fiber membrane module according to clause 15, wherein the axial length of the outermost diameter portion of the header along the central axis is longer than the axial length of the outermost diameter portion of the tubular container along the central axis.

### [Clause 18]

The hollow fiber membrane module according to clause 15, wherein the axial length of the outermost diameter portion of the tubular container along the central axis is longer than the axial length of the outermost diameter portion of the header along the central axis.

### [Clause 19]

A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction thereof, wherein
a clearance sufficient to avoid contact between an outer circumference surface of the tubular container and a predetermined location of the header, when a relative position of the tubular container and the header changes in response to an external impact acting on the header, is formed between the outer circumference surface of the tubular container and an inner circumference surface of an annular side portion of the header located farther outside than the outer circumference surface in a radial direction of the tubular container.

### [Clause 20]

The hollow fiber membrane module according to clause 19, wherein the header and the tubular container are welded at a welded portion, and the welded portion is a single welded portion formed at a contact site between the end portion of the tubular container and the header.

### [Clause 21]

The hollow fiber membrane module according to clause 20, wherein the predetermined location of the header is an edge portion, which is most distant from the welded portion, of the inner circumference surface of the annular side portion of the header.

### [Clause 22]

A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in a direction of a central axis extending in a longitudinal direction thereof, wherein
the header and the tubular container are welded at a welded portion formed at a contact site between the end portion of the tubular container and the header,
a clearance in a radial direction of the tubular container is formed between an outer circumference surface of the tubular container and an inner circumference surface of an annular side portion of the header located farther outside than the outer circumference surface in the radial direction,
the clearance at a first position is formed to be wider than the clearance at a second position that is closer to the welded portion than the first position in the axial direction, the welded portion is located at a position other than a position vertically above a collision site upon dropping that is located at a lowermost vertical position of the header in a state in which the hollow fiber membrane module is tilted up to a predetermined angle exceeding 0° at which the central axis is horizontal, and
a diameter size of an outermost diameter portion of the header is equal to a diameter size of an outermost diameter portion of the tubular container.

### Industrial Applicability

The present invention is suitably applied to a hollow fiber membrane module manufactured by joining a header and a tubular container.

### Reference Signs List

- 1: Hollow fiber membrane module
- 10: Tubular container
- 11: End portion
- 14: Port
- 14b: Rubber plug attached to port
- 15: Interference section that comes into contact with header
- 16: End portion outer circumference surface (outer circumference surface)
- 17: Outer protruding portion
- 19: Outermost diameter portion
- 20: Hollow fiber membrane bundle
- 21: End portion
- 30: Potting portion
- 30a: Section made only by potting resin
- 30b: Section in which potting resin has entered into gaps between hollow fiber membranes of hollow fiber membrane bundle
- 40: Header
- 42: Leg portion (annular side portion of header)
- 42a: Small diameter portion
- 42b: Intermediate portion
- 42c: Large diameter portion
- 42e: Edge portion of inner circumference surface of annular side portion 42i that is most distant from welded portion 50 (predetermined location of header)
- 42i: Inner circumference surface of annular side portion
- 42o: Outer circumference surface of annular side portion
- 44: Interference section that comes into contact with tubular container
- 45: Nozzle portion
- 45b: Rubber plug (elastic member) attached to nozzle portion
- 46: Top plate portion
- 46a: Inner surface (at top plate portion of header)
- 46e: Outer circumference edge of top plate portion
- 48: Space through which fluid passes
- 49: Outermost diameter portion
- 50: Welded portion
- 50b: Welding lowermost portion
- A: Central axis
- B: Collision site upon dropping
- C: Clearance
- C1: Clearance at first position
- C2: Clearance at second position
- G: Ground or the like
- P1: First position
- P2: Second position
- X₁₉: Axial length along central axis A of outermost diameter portion 19 of tubular container 10
- X₄₉: Axial length along central axis A of outermost diameter portion 49 of header 40
- θ: Angle at which, in a state in which hollow fiber membrane module is tilted, vertical height of lowermost position of nozzle portion or elastic member attached to nozzle portion is equal to vertical height of collision site upon dropping

## Claims

1. A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction,
the header and the tubular container being welded at a welded portion, wherein
a clearance in a radial direction of the tubular container is formed between an outer circumference surface of the tubular container and an inner circumference surface of an annular side portion of the header located farther outside than the outer circumference surface in the radial direction, and
the clearance at a first position is formed to be wider than the clearance at a second position that is closer to the welded portion than the first position in the axial direction.

2. The hollow fiber membrane module according to claim 1, wherein the welded portion is a single welded portion formed at a contact site between the end portion of the tubular container and the header.

3. The hollow fiber membrane module according to claim 2, wherein the clearance increases from the second position toward the first position.

4. The hollow fiber membrane module according to claim 3, wherein the clearance gradually increases from the second position toward the first position.

5. The hollow fiber membrane module according to claim 3, wherein the clearance increases stepwise from the second position toward the first position.

6. The hollow fiber membrane module according to claim 5, wherein the inner circumference surface includes a small diameter portion and a large diameter portion having a larger inner diameter than the small diameter portion.

7. The hollow fiber membrane module according to claim 6, wherein an intermediate portion that connects the small diameter portion and the large diameter portion is provided between the small diameter portion and the large diameter portion.

8. The hollow fiber membrane module according to claim 7, wherein the intermediate portion has a tapered shape.

9. The hollow fiber membrane module according to claim 8, wherein the small diameter portion is formed to be slightly larger than an outer diameter of the end portion of the tubular container to an extent that the small diameter portion functions as a surface for positioning a relative position of the tubular container and the header in a radial direction perpendicular to the central axis when the tubular container and the header are welded.

10. The hollow fiber membrane module according to claim 9, wherein a value obtained by dividing the clearance at the first position that is a position on the end portion outer circumference surface opposite an edge portion of the annular side portion by a length from a lowermost portion of the welded portion at the outer circumference surface to a position on the outer circumference surface opposite the edge portion is greater than or equal to 0.29.

11. The hollow fiber membrane module according to claim 2, wherein the welded portion is arranged at a position other than a position vertically above a collision site upon dropping that is located at a lowermost vertical position of a section of the header excluding a nozzle portion in a state in which the hollow fiber membrane module is tilted at an angle that is less than a predetermined angle and exceeds 0° at which the central axis is horizontal relative to a horizontal plane.

12. The hollow fiber membrane module according to claim 11, wherein the predetermined angle is an angle at which, in a state in which the hollow fiber membrane module is tilted relative to the horizontal plane, a vertical height of a lowermost position of the nozzle portion or an elastic member to be attached to the nozzle portion relative to the horizontal plane is equal to a vertical height of the collision site upon dropping relative to the horizontal plane.

13. The hollow fiber membrane module according to claim 12, wherein the elastic member is a rubber plug to be attached to the nozzle portion.

14. The hollow fiber membrane module according to claim 13, wherein when an angle of a central axis of the hollow fiber membrane module relative to the horizontal plane is an angle within a range greater than 0° and less than or equal to 38°, the welded portion is located at a position other than a position vertically above the collision site upon dropping.

15. The hollow fiber membrane module according to claim 1, wherein a diameter size of an outermost diameter portion of the header is equal to a diameter size of an outermost diameter portion of the tubular container.

16. The hollow fiber membrane module according to claim 15, wherein an axial length of the outermost diameter portion of the header along the central axis is equal to an axial length of the outermost diameter portion of the tubular container along the central axis.

17. The hollow fiber membrane module according to claim 15, wherein the axial length of the outermost diameter portion of the header along the central axis is longer than the axial length of the outermost diameter portion of the tubular container along the central axis.

18. The hollow fiber membrane module according to claim 15, wherein the axial length of the outermost diameter portion of the tubular container along the central axis is longer than the axial length of the outermost diameter portion of the header along the central axis.

19. A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in an axial direction thereof, wherein
a clearance sufficient to avoid contact between an outer circumference surface of the tubular container and a predetermined location of the header, when a relative position of the tubular container and the header changes in response to an external impact acting on the header, is formed between the outer circumference surface of the tubular container and an inner circumference surface of an annular side portion of the header located farther outside than the outer circumference surface in a radial direction of the tubular container.

20. The hollow fiber membrane module according to claim 19, wherein the header and the tubular container are welded at a welded portion, and the welded portion is a single welded portion formed at a contact site between the end portion of the tubular container and the header.

21. The hollow fiber membrane module according to claim 20, wherein the predetermined location of the header is an edge portion, which is most distant from the welded portion, of the inner circumference surface of the annular side portion of the header.

22. A hollow fiber membrane module comprising:
a tubular container that has one end portion and another end portion, which are open;
a hollow fiber membrane bundle that is loaded in the tubular container;
a potting portion that embeds and fixes the hollow fiber membrane bundle at both end portions of the tubular container; and
a header that includes a nozzle portion configured to serve as a fluid inlet and outlet and is provided at both end portions of the tubular container in a direction of a central axis extending in a longitudinal direction thereof, wherein
the header and the tubular container are welded at a welded portion formed at a contact site between the end portion of the tubular container and the header,
a clearance in a radial direction of the tubular container is formed between an outer circumference surface of the tubular container and an inner circumference surface of an annular side portion of the header located farther outside than the outer circumference surface in the radial direction,
the clearance at a first position is formed to be wider than the clearance at a second position that is closer to the welded portion than the first position in the axial direction,
the welded portion is located at a position other than a position vertically above a collision site upon dropping that is located at a lowermost vertical position of the header in a state in which the hollow fiber membrane module is tilted up to a predetermined angle exceeding 0° at which the central axis is horizontal, and
a diameter size of an outermost diameter portion of the header is equal to a diameter size of an outermost diameter portion of the tubular container.
